Europäisches Patentamt

European Patent Office

Office européen des brevets

(11) Veröffentlichungsnummer: **0 440 903 A1**

## (12) EUROPÄISCHE PATENTANMELDUNG

(21) Anmeldenummer: 90122758.7

(22) Anmeldetag: 28.11.90

(51) Int. Cl.5: **H02G 9/06**, H02G 15/013,
F16L 25/00

(30) Priorität: 09.02.90 DE 4004009

(43) Veröffentlichungstag der Anmeldung:
14.08.91 Patentblatt 91/33

(84) Benannte Vertragsstaaten:
AT BE CH DE ES FR GB GR IT LI NL SE

(71) Anmelder: RXS Schrumpftechnik-Garnituren
GmbH
Profilstrasse 4
W-5800 Hagen 1(DE)

(72) Erfinder: Meltsch, Hans-Jürgen
Im Wietloh 18a
W-5840 Schwerte(DE)
Erfinder: Kluwe, Wolf
Sonnenberg 14
W-5800 Hagen 5(DE)

(74) Vertreter: Fuchs, Franz-Josef, Dr.-Ing. et al
Postfach 22 13 17
W-8000 München 22(DE)

(54) Anpassungsdichtelement für den Abschluss einer Einführungsöffnung bei Kabelgarnituren, Rohrzügen oder dergleichen.

(57) Bei der Erfindung handelt es sich um ein Anpassungsdichtelement (1) für den Abschluß von Einführungsöffnungen (34 bei Kabelgarnituren, Rohrzügen oder ähnlichen Vorrichtungen. Die Durchmesseranpassung zu den eingeführten Gegenständen, zum Beispiel zu Kabeln, erfolgt in einer Abschlußwandung (2), die aus konzentrischen, austrennbaren Dichtungsringen (5) gebildet wird. Das Anpassungsdichtelement (1) ist längsgeteilt und kann auf Stutzen, Rohre oder in Öffnungen eingespreizte dübelartige Aufnahmen (29) dicht angeordnet werden.

FIG1

## ANPASSUNGSDICHTELEMENT FÜR DEN ABSCHLUSS EINER EINFÜHRUNGSÖFFNUNG BEI KABELGARNI-TUREN, ROHRZÜGEN ODER DERGLEICHEN.

Die Erfindung betrifft ein Anpassungsdichtelement für den Abschluß einer Einführungsöffnung bei Kabelgarnituren, Rohrzügen oder dergleichen, wobei konzentrisch angeordnete, austrennbare Dichtungsringe vorgesehen sind.

In freien oder belegten Rohrzügen für Kabel oder ähnliche langgestreckte Elemente kann sich bei offenen Enden Gas oder Wasser ausbreiten. Um das zu verhindern, werden bisher in die Einführungsöffnungen zum Beispiel Gummiformteile, Schrumpfformteile oder spreizbare Rohreinsätze eingesetzt. An letztere können beispielsweise Formkörper mit hintereinander dienenden Lamellen, wie sie in der Patentanmeldung 39 12 179.8 beschrieben sind, eingesetzt werden. Die Einführungsöffnungen müssen dann mit Spezialwerkzeugen mit entsprechendem Durchmesser ausgeschnitten werden. Dies erfordert spezielle Werkzeuge und Fachkenntnisse. Weiterhin ist aus der US-Patentschrift 4.694.118 eine Kabelmuffe bekannt, bei der in den stirnseitigen Dichtungskörpern elastische Dichtungseinsätze verwendet werden, die aus konzentrisch angeordneten Ringen gebildet sind. Diese Ringe werden entsprechend des geforderten Einführungsdurchmessers ausgerissen und bilden im Zusammenspiel mit dem eigentlichen Dichtungskörper, durch den der nötige Dichtungsdruck erzeugt wird, das Dichtungssystem innerhalb einer speziellen Kabelmuffe. Dieses Dichtungssystem kann jedoch nicht für Abschlüsse an Rohrstutzen oder ähnlichen Öffnungen eingesetzt werden.

Für vorliegende Erfindung ergibt sich somit die Aufgabe, ein selbständiges Anpassungsdichtelement für Kabelrohrstutzen oder ähnliche Öffnungen zu schaffen, wobei in einfacher Weise eine Durchmesseranpassung für eingeführte Gegenstände wie zum Beispiel Kabel, möglich sein soll. Die gestellte Aufgabe wird gemäß der Erfindung mit einem Anpassungsdichtelement der eingangs beschriebenen Art dadurch gelöst, daß die Dichtungsringe einseitig zusammenhängend eine zylindrische, geschlossene Abschlußwand bilden, daß die Abschlußwand an einem zylindrischen Formstück als einseitiger Abschluß fest integriert ist, daß das zylindrische Formstück entlang einer Mantellinie und die Abschlußwandung radial geschlitzt sind, daß entlang des Längsschlitzes Verschlußelemente zur Aufnahme eines Klemmelementes ausgebildet sind und daß das offene Ende des zylindrischen Formstückes mit Ansatz- und/oder Dichtelementen zum Ansatz an einer Aufnahme der Einführungsöffnung versehen ist.

Der Vorteil der Erfindung gegenüber dem Stand der Technik liegt in erster Linie darin, daß hier ein selbständiges Formteil vorliegt, in dem alle notwendigen Einheiten zusammengeschlossen sind. An der einen Seite des zylindrischen Formstückes wird die Abdichtung zur abzuschließenden Öffnung vorgenommen, während an der zweiten Seite eine dichtende Anpassung zum eingeführten Gegenstand, zum Beispiel einem Kabel, erfolgt. Im Mittelteil können unter Umständen zusätzliche Maßnahmen am eingeführten Gegenstand vorgenommen werden, wobei dann auch hier gleichzeitig ein Schutz gegeben ist. Das Formstück ist längsgeteilt und kann deshalb auch über bereits verlegte Gegenstände aufgebracht werden, so daß zum Beispiel ein nachträgliches Abdichten eines Kabelrohrzuges erfolgen kann. Durch die einfache Art der intetrierten Anpassung können die Einführungsöffnungen jeweils völlig unproblematisch und ohne Spezialwerkzeuge entsprechend hergestellt werden. So kann das Anpassungsdichtelement gemäß der Erfindung durch einfaches Aufklemmen auf entsprechende Stutzen oder auch auf in die Öffnungen eingeführte dübelähnliche Ansätze dicht aufgebracht werden. Das Anpassungsdichtelement oder zumindest Teilbereiche davon bestehen aus elastischem Material, vorzugsweise aus Neopren oder Styrolbutadienkautschuk (SPR).

In den Dichtungsbereichen können zusätzliche Dichtungsmittel, wie zum Beispiel an sich bekannte plastische Dichtungsmassen oder Dichtungspasten, eingebracht werden. Auf diese Weise werden auch Einziehriefen oder ähnliche Verletzungen der Kabeloberflächen ausgeglichen und sicher abgedichtet. Der Verschluß in den Dichtungsbereichen wird mit entsprechenden Klemmitteln vorgenommen, die entweder separat oder in integrierter Form vorliegen. Weiterhin kann durch die Länge des zylindrischen Formstückes ein zusätzlicher Aufnahmeraum geschaffen werden, der unter Umständen durch Ausbildung in Form von Wellungen oder in Form eines Balges eine gewisse zusätzliche Flexibilität erhält, um Biege- oder Torsionsbeanspruchungen ausgleichen zu können. Dadurch werden die Dichtungszonen von mechanischen Beanspruchungen entlastet.

Die Erfindung wird nun anhnd von 12 Figuren näher erläutert.

Figur 1     zeigt die Frontansicht auf die Einführungsseite des Anpassungsdichtelementes.

Figur 2     zeigt ein Längsschnittbild des Anpassungsdichtelementes.

Figur 3     zeigt ein Verschlußsystem mit einem Schraubelement.

Figur 4   zeigt einen Schnappverschluß mit Keilverspannung .

Figur 5   zeigt einen Verschluß mit Keilverspannung.

Figur 6   zeigt einen Verschluß mit einem zangenähnlichen Element.

Figur 7   zeigt einen Knebelverschluß.

Figur 8   zeigt einen Schnappverschluß in geöffnetem Zustand.

Figur 9   zeigt den Schnappverschluß nach Figur 8 im geschlossenen Zustand.

Figur 10   zeigt eine Aufnahme in Form eines Spreizdübels für das Anpassungsdichtelement.

Figur 11   zeigt den Spreizdübel in Frontansicht.

Figur 12   zeigt die Wirkungsweise des Spreizkeiles im Spreizdübel.

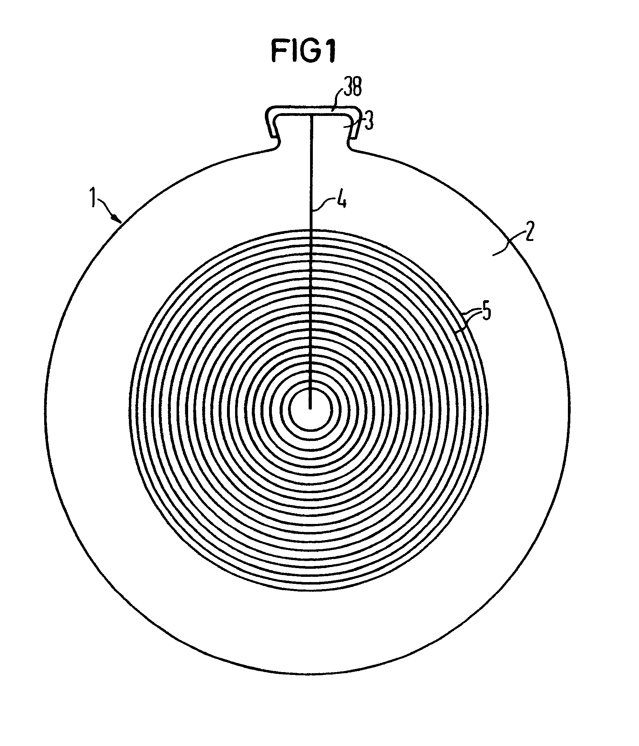

Aus Figur 1 ist das Anpassungsdichtelement 1 gemäß der Erfindung in einer Frontansicht von der Abschlußwandung 2 her gesehen dargestellt. Dadurch sind die konzentrischen Trennungsschnitte zu erkennen, so daß sich jeweils dazwischen liegende, einzelne Dichtungsringe 5 ergeben. Diese Trennschnitte sind nicht völlig durch die gesamte Abschlußwand 2 hindurch ausgeführt, so daß kurze Materialstege verbleiben, über die die einzelnen Dichtungsringe 5 zusammenhängen und somit eine einheitlich geschlossene Abschlußwand 2 gewährleisten. Bei Bedarf werden nun diese Dichtungsringe 5 entsprechend des erforderlichen Durchmessers ausgetrennt, vorzugsweise durch Ausreißen. Nach Herstellung der Einführungsöffnung kann das Anpassungsdichtelement 1 durch Öffnen, das heißt durch Spreizen, entlang des radialen Schlitzes 4, der sich in den wulstförmigen Verschlußelementen 3 längsseitig fortsetzt, über den einzuführenden Gegenstand, zum Beispiel über ein Kabel aufgebracht werden. Anschließend wird der Längsschlitz 4 durch Aufsetzen eines Verschlußelementes verschlossen. Ein solches Verschlußelement kann zum Beispiel als Klemmschiene 38 ausgebildet sein, die klemmend über die wulstförmigen Verschlußelemente 3 des Formstückes aufgeschoben wird. Gleichzeitig erfolgt bei diesem Vorgang auch das dichte Abschließen der zu dichtenden Öffnung eines Rohres, Kabelstutzens oder dergleichen.

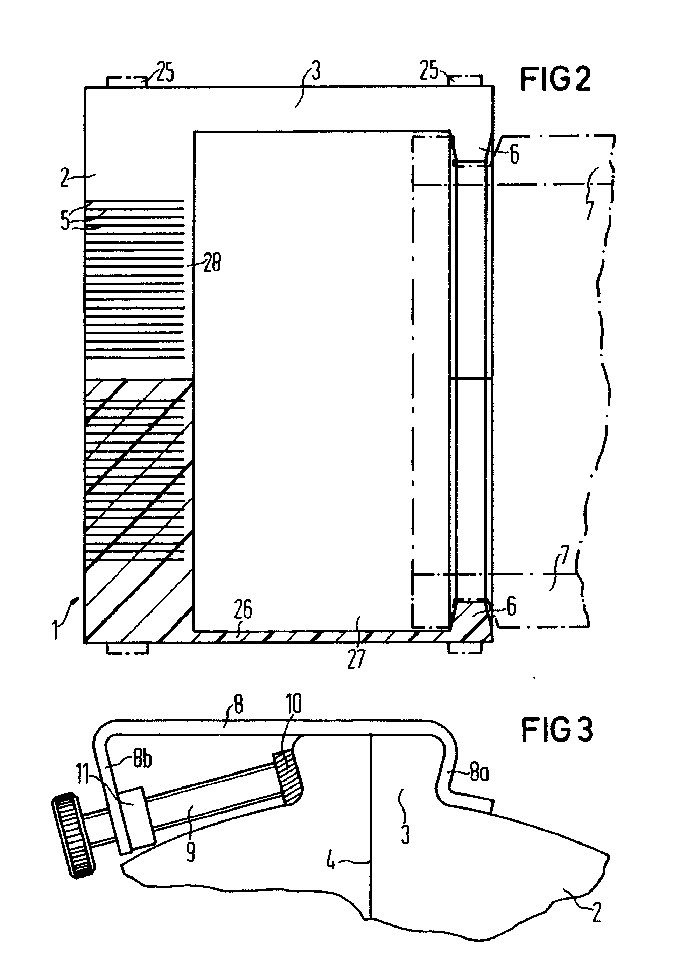

Die Figur 2 verdeutlicht das Anpassungsdichtelement 1 in einem Längsschnitt in der Ebene des Längsschlitzes 4. Hier ist gezeigt, daß das zylindrische Formstück 26 an dem der Abschlußwandung 2 gegenüberliegenden Ende beispielsweise ein nach einwärts gerichtetes, umlaufendes Ansatzelement 6 aufweist, mit dem eine rutschfeste Verankerung in einer Nut nahe der Öffnung des Rohres 7 erreicht werden kann. Mit entsprechenden Dichtungsmitteln, wie zum Beispiel ein Gemisch aus Polyisobutylen, Butylkautschuk und geeigneten Zusatzstoffen, erfolgt unter Umständen in den entsprechenden Dicht- und Trennflächen zusätzlich eine Abdichtung. Zwischen dieser Verankerung und der durch die Materialstege 28 geschlossenen Abschlußwandung 2 aus den vorgeschnittenen Dichtungsringen 5 erstreckt sich ein Aufnahmeraum 27, in dem eventuell Zusatzmaßnahmen getroffen werden können. Der Verschluß des Anpassungsdichtelementes 1 kann auch mit Hilfe von umlaufenden Spannbändern 25 und entsprechenden Spannvorrichtungen vorgenommen werden, wobei diese unter Umständen gleichzeitig in die längsseitigen Verschlußelemente, die die wulstförmigen Verschlußelemente 3 umfassen, übergehen können. Im Bereich des Aufnahmeraumes 27 kann die Wandung des zylindrischen Formstückes 26, wie bereits erwähnt wurde, balgartig oder wellrohrförmig ausgebildet sein. Auf diese Weise wird die Flexibilität im Bedarfsfall erhöht. Der Verschluß kann jedoch auch als Manschette ausgebildet sein, die dann das gesamte Anpassungsdichtelement 1 umfaßt, so daß auf diese Weise ein zusätzlicher Schutz gegeben ist. In diesem Fall werden dann die eigentlichen Verschlußelemente zweckmäßigerweise entlang der Manschette angeordnet.

In Figur 3 ist ein, den wulstförmigen Verschlußelementen 3, die beidseitig entlang des Längsschlitzes 4 verlaufen, angepaßter Druckbügel 8 angeordnet. Der eine abgebogene Schenkel 8a ist der hinterschnittenen Form des einen längsseitigen Verschlußelementes 3 angepaßt und stützt sich an dessen Flanke ab. In dem zweiten Schenkel 8b ist in einem Gewinde 11 eine Druckschraube 9 eingesetzt, mit der ein Stempel 10 gegen das zweite Verschlußelement 3 gepreßt werden kann. Damit wird der längsseitige Schlitz 4 unter entsprechendem Schließdruck gehalten.

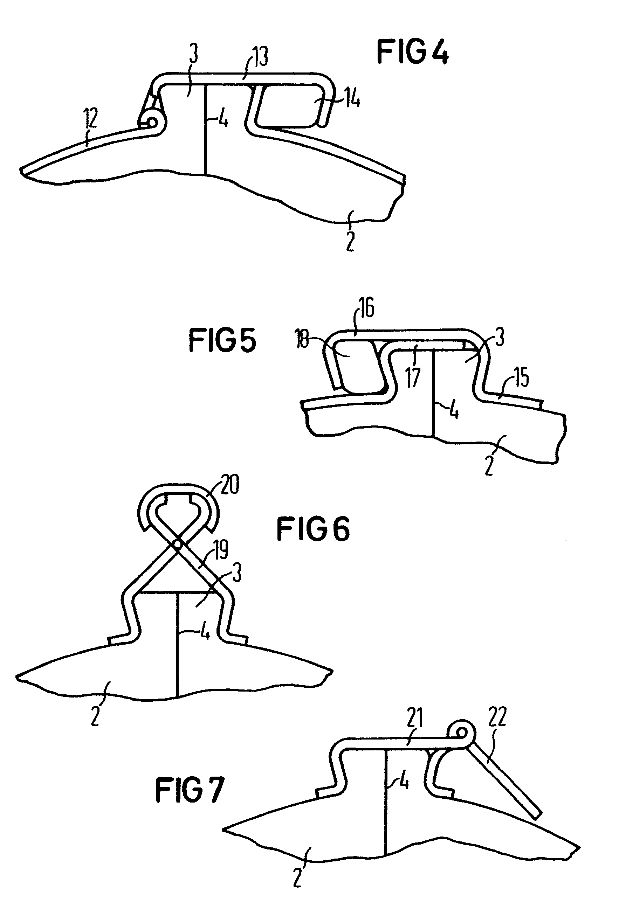

Die Figur 4 zeigt ein Spannband 12, das an den kritischen Bereichen des Anpassungsdichtelementes 1 umlaufend angeordnet ist. Im Bereich der längsseitigen Verschlußelemente 3 ist nun ein längsseitig verlaufendes Winkelblech 13 angeordnet, das an einer Seite mit dem Spannband gelenkig verbunden ist. Das zweite Ende des Spannbandes 12 ist als Widerlager am anderen Verschlußelement 3 angewinkelt. Nach dem Überklappen des Winkelbleches 13 kann direkt oder wie die Figur zeigt über einen zusätzlichen Spannkeil 14 der nötige Schließdruck im Verschlußbereich hergestellt werden.

Die Figur 5 zeigt einen längsseitigen Verschluß, bei dem auf ein Gelenk verzichtet ist. Hier sind beide Enden des Spannbandes 15 den Flanken der Verschlußelemente 3 angepaßt, wobei das Ende 16 übergreifend ausgebildet und so abgewinkelt ist, daß zwischen dieser Abwinkelung und dem ersten Ende 17 des Spannbandes 15 wiederum ein Spannkeil 18 eingeführt werden kann.

In Figur 6 ist ein zangenförmiges Klemmelement 19 für den längsseitigen Verschluß dargestellt. Hier werden die Verschlußelemente 3 von den angepaßten Zangenschenkeln umfaßt, wobei diese Zangenschenkel mit erforderlichem Druck durch eine Arretierungsklammer 20 fixiert werden.

Die Figur 7 zeigt eine weitere Verschlußversion für die längsseitig verlaufenden Verschlußelemente 3. Hier wird ein klemmender Knebelverschluß 21-22 verwendet. Hier umfaßt der eine Verschlußteil 21 das eine Verschlußelement 3 und überbrückt den Längsschlitz 4, während das knebelartige Verschlußelement 22 über eine gelenkartige Verbindung klemmend gegen das zweite Verschlußelement 3 durch Kraftaufwendung geknebelt wird. Durch entsprechende Formgebung der Verschlußteile 21 und 22 erfolgt im Zusammenspiel mit den Hinterschneidungen der Verschlußelemente 3 die Arretierung des Verschlusses.

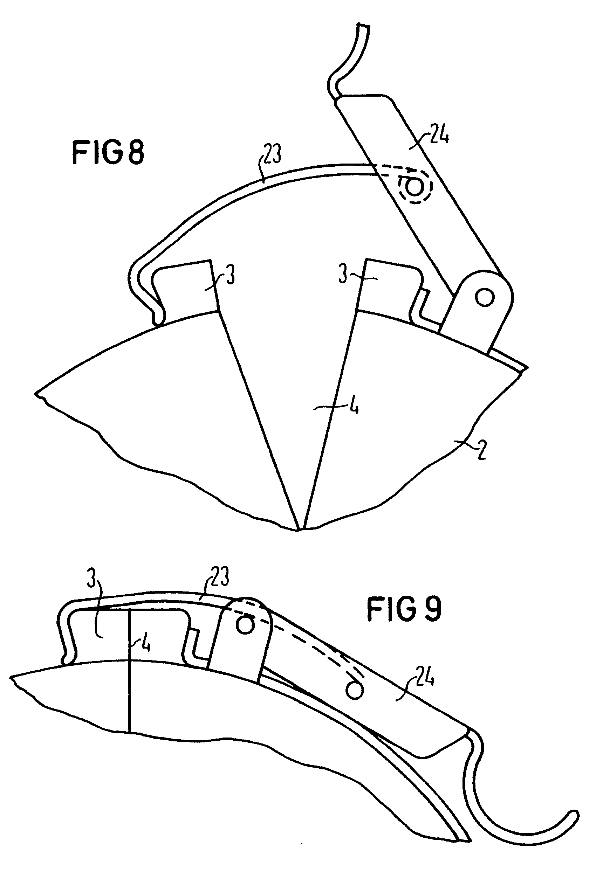

In Figur 8 ist ein Schnappverschluß 23-24 in geöffneter Stellung gezeigt. Hier umgreift ein Klammerelement 23 mit einer Abwinkelung das erste Verschlußelement 3 an seiner hinterschnittenen Flanke. Das andere Ende des Klammerelementes 23 ist drehbar in einem Spannhebel 24 gelagert. Dieser Spannhebel 24 ist hinter dem zweiten Verschlußelement 3 mit einem Winkel abgestützt. Beim Umlegen des Spannhebels 24 werden die beiden Verschlußelemente 3 gegeneinander gezogen und mit entsprechendem Druck dichtend zusammengepreßt. Dieser Endzustand wird in Figur 9 verdeutlicht.

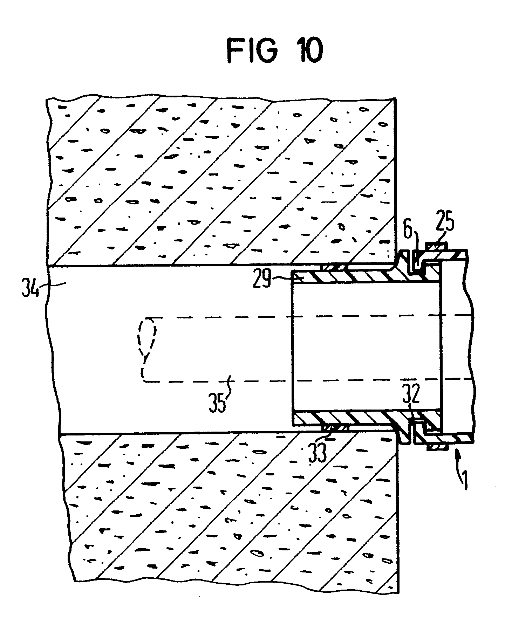

In Figur 10 ist die Schachtwand eines Kabelschachtes angedeutet, in der eine Durchführungsöffnung 34 eingebracht ist. Diese Durchführungsöffnung 34 soll nun mit Hilfe einer Vorrichtung gemäß der Erfindung abgeschlossen werden, wobei zunächst nicht von Bedeutung ist, ob dieser Rohrzug frei oder - wie angedeutet - mit einem Kabel 35 belegt ist. In der Durchführungsöffnung 34 ist gemäß der Erfindung eine Aufnahme in Form eines Spreizdübels 29 für das Anpassungsdichtelement 1 eingesetzt, mit dem eine Abdichtung zur Wandung des Rohrzuges hergestellt wird. Dieser Spreizdübel 29 ist, was hier nicht sichtbar ist, längsgeteilt und wird nach dem Einführen aufgespreizt. Über eine zwischen der Wandung und dem Spreizdübel 29 eingelegte Ringdichtung 33 wird der Ringspalt abgedichtet, wobei der Spreizdübel 29 bis zu einem als Stützring ausgebildeten Anschlag eingeschoben und fixiert werden kann. Der Spreizdübel 29 hat ein nach außen überstehendes Ende, in dem auf der Außenseite zum Beispiel eine umlaufende Ringnut 32 angeordnet ist, die am äußersten Ende zum Beispiel von einem Rastelement, vorzugsweise einem Rastring, abgeschlossen ist. In dieser Ringnut 32 wird dann das eigentliche Abschlußteil in Form des bereits beschriebenen Anpassungsdichtelementes 1, das bei Bedarf in seiner Abschlußwandung 2 mit Einführungsöffnungen versehen werden kann, mit einem entsprechenden Ansatzelement 6 eingerastet und mit Hilfe der beschriebenen Verschlußelemente, zum Beispiel mit Spannbändern 25, festgeklemmt.

In Figur 11 wird nun die Ausbildung der Aufnahme in Form des Spreizdübels 29 in einer Frontansicht erläutert. Daraus ist ersichtlich, daß der Spreizdübel 29 im Prinzip als zylindrischer Formkörper ausgebildet ist, der in Längsrichtung einmal geschlitzt ist. Die beiden Ränder entlang dieses Schlitzes überdecken sich gegenseitig so weit, daß auch beim Aufspreizen zum größten Durchmesser noch eine zur Abdichtung ausreichende Überdeckung vorhanden ist. Die Ringdichtung 33 auf der Außenseite des Spreizdübels 29 ergibt dabei die Abdichtung zur umgebenden Wandung der Durchführungsöffnung 34. Zur Aufspreizung des Spreizdübels 29 sind nun entlang der beiden Längsränder Nutansätze 36 so angeordnet, daß sich zwei Nuten bilden, deren Öffnungen sich gegenüber stehen. Auf diese Weise entsteht zwischen ihnen eine doppelte Spreiznut 31, in welche ein entsprechend langgestrecktes Spreizelement eingetrieben werden kann. Bei dieser Eintreibung wird dar Spreizdübel 29 im Durchmesser vergrößert und nach auswärts mit seiner Ringdichtung 33 gegen die Wandung der Durchführungsöffnung 34 gepreßt. Die Durchmesseranpassung des Spreizdübels 29 an den Durchmesser der Durchführungsöffnung 34 erfolgt durch entsprechende Wahl des Spreizelementes, das je nach Erfordernis entsprechend breit oder schmal ist.

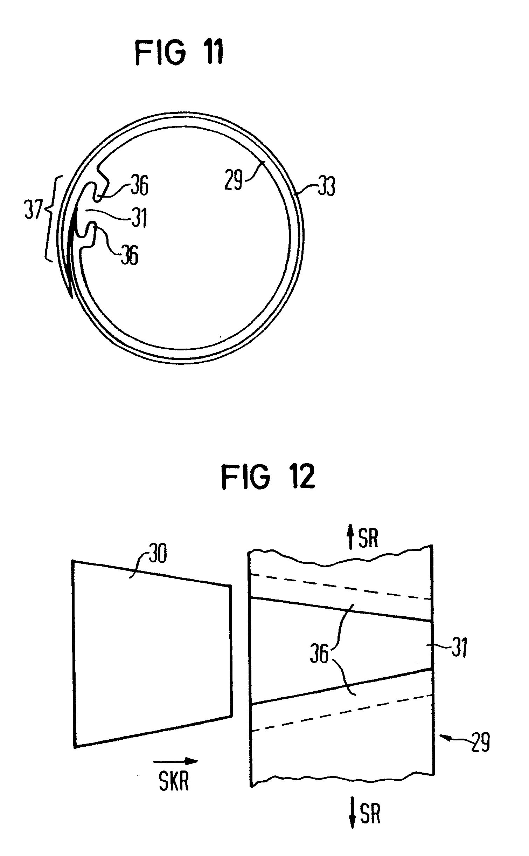

In der Figur 12 wird nun der Spreizvorgang durch die entsprechenden Pfeile verdeutlicht. So wird durch den Pfeil SKR angedeutet, daß ein vorzugsweise konischer Spreizkeil 30 in die ebenfalls vorzugsweise konisch angepaßte Spreiznut 31 des Spreizdübels 29 eingeführt bzw. eingetrieben wird. Bei diesem Vorgang wird der Spreizdübel 29 in Richtung der beiden Pfeile SR auseinandergetrieben und gegen die Außenumfassung der Durchführungsöffnung 34 gepreßt und somit die Dichtung hergestellt.

Das Anpassungselement 1 kann jedoch auch an beliebig andere Aufnahmen angekoppelt werden, da dieses von der Art der Ausbildung eines entsprechenden Rohrdichtungseinsatzes nur bezüglich des Durchmessers abhängig ist.

**Patentansprüche**

1. Anpassungsdichtelement (1) für den Abschluß einer Einführungsöffnung bei Kabelgarnituren, Rohrzügen oder dergleichen, wobei konzentrisch angeordnete, austrennbare Dichtungsringe (5) vorgesehen sind, **dadurch gekenn-**

zeichnet, daß die Dichtungsringe (5) einseitig zusammenhängend eine zylindrische, geschlossene Abschlußwand (2) bilden, daß die Abschlußwand (2) an einem zylindrischen Formstück (26) als einseitiger Abschluß fest integriert ist, daß das zylindrische Formstück (26) entlang einer Mantellinie und die Abschlußwandung (2) radial geschlitzt sind, daß entlang des Längsschlitzes (4) Verschlußelemente (3) zur Aufnahme eines Klemmelementes (8, 13, 16, 19, 21, 23, 29) ausgebildet sind und daß das offene Ende des zylindrischen Formstückes (26) mit Ansatz- und/oder Dichtelementen (6) zum Ansatz an einer Aufnahme (7, 29) der Einführungsöffnung (34) versehen ist.

2. Anpassungsdichtelement (1) nach Anspruch 1, **dadurch gekennzeichnet,** daß es (1) aus elastischem Material, vorzugsweise aus Neopren oder Styrolbutadienkautschuk besteht.

3. Anpassungsdichtelement (1) nach einem der vorhergehenden Ansprüche, **dadurch gekennzeichnet,** daß die Dichtungsringe (5) über lamellenartige Materialstege (28) miteinander verbunden sind, so daß sie einfach, vorzugsweise durch Ausreißen, austrennbar sind.

4. Anpassungsdichtelement (1) nach einem der vorhergehenden Ansprüche, **dadurch gekennzeichnet,** daß das Ansatzelement als Ringwulst (6) oder Ringnut ausgebildet ist.

5. Anpassungsdichtelement (1) nach einem der vorhergehnden Ansprüche, **dadurch gekennzeichnet,** daß das Klemmelement als Klemmschiene (38) ausgebildet ist, die als Verschlußelement keilförmig hinterschnittene, wulstförmige Verschlußelemente (3) entlang des Längsschlitzes (4) überspannt.

6. Anpassungsdichtelement (1) nach Anspruch 5, **dadurch gekennzeichnet,** daß die Klemmschiene (38) und die beiden aneinanderstoßenden Verschlußelemente (3) in Längsrichtung keilförmig ausgebildet sind.

7. Anpassungsdichtelement (1) nach einem der vorhergehenden Ansprüche, **dadurch gekennzeichnet,** daß verspannende Schraubelemente (9) zur Verklemmung von wulstförmigen Verschlußelementen (3) angebracht sind.

8. Anpassungsdichtelement (1) nach einem der vorhergehenden Ansprüche, **dadurch gekennzeichnet,** daß umlaufende Spannbänder (25), insbesondere an beiden Enden des zylindrischen Formstückes (26), angeordnet sind.

9. Anpassungsdichtelement (1) nach Anspruch 8, **dadurch gekennzeichnet,** daß die Spannbänder (25) mit Hilfe eines Schnappverschlusses (13, 23-24) gespannt sind.

10. Anpassungsdichtelement (1) nach einem der vorhergehenden Ansprüche, **dadurch gekennzeichnet,** daß im Verschlußbereich Spannkeile (14, 18) eingesetzt sind.

11. Anpassungsdichtelement (1) nach einem der Ansprüche 1 bis 4, **dadurch gekennzeichnet,** daß ein zangenförmiges Klemmelement (19) mit einem Fixierelement (20) über wulstförmigen Verschlußelementen (3) angeordnet ist.

12. Anpassungsdichtelement (1) nach einem der Ansprüche 1 bis 4, **dadurch gekennzeichnet,** daß ein klemmender Knebelverschluß (21-22), vorzugsweise über den wulstförmigen Verschlußelementen (3), angeordnet ist.

13. Anpassungsdichtelement (1) nach einem der vorhergehenden Ansprüche, **dadurch gekennzeichnet,** daß zusätzliche Dichtmittel, vorzugsweise eine Dichtpaste aus Polyisobutylen, Butylkautschuk und geeigneten Zusatzstoffen, in den Dichtungsbereichen der Trennflächen, der Einführungen und Ansätze eingebracht sind.

14. Anpassungsdichtelement (1) nach einem der vorhergehenden Ansprüche, **dadurch gekennzeichnet,** daß das zylindrische Formstück (26) verformbare Bereiche, vorzugsweise in Form eines wellig ausgebildeten Balges, aufweist.

15. Anpassungsdichtelement (1) nach einem der vorhergehenden Ansprüche, **dadurch gekennzeichnet,** daß zwischen den Ansatzelementen (6) der einen Seite und der Abschlußwandung (2) der zweiten Stirnseite ein Aufnahmeraum (27) angeordnet ist.

16. Anpassungsdichtelement (1) nach einem der vorhergehenden Ansprüche, **dadurch gekennzeichnet,** daß die Aufnahme (7, 29) in der Einführungsöffnung (34) klemmend eingesetzt ist.

17. Anpassungsdichtelement (1) nach Anspruch 15, **dadurch gekennzeichnet,** daß die Aufnahme (7, 29) in der Einführungsöffnung (34) dichtend, vorzugsweise mit einem Dichtmittel, eingeklemmt und/oder eingeklebt ist.

**18.** Anpassungsdichtelement (1) nach Anspruch 15, **dadurch gekennzeichnet,** daß die Aufnahme als spreizbares, dübelartiges Klemmelement (29) ausgebildet ist, daß vorzugsweise zwischen Klemmelement und der Wandung der Einführungsöffnung (34) ein Dichtungsmittel (33) angeordnet ist und daß das nach außen überstehende Ende des Klemmelements (29) den Konturen der Ansatzelemente (6) des zylindrischen Formstückes (26) angepaßt ist.

**19.** Anpassungsdichtelement (1) nach Anspruch 17, **dadurch gekennzeichnet,** daß das Klemmelement (29) mit Hilfe eines Spreizkeiles (30) aufspreizbar ist.

**20.** Anpassungsdichtelement (1) nach Anspruch 18, **dadurch gekennzeichnet,** daß der Spreizkeil (30) in Längsrichtung keilförmig ausgebildet ist.

**21.** Anpassungsdichtelement (1) nach einem der Ansprüche 18 oder 19, **dadurch gekennzeichnet,** daß der Spreizkeil (30) in einer Spreiznut (31) des Klemmelementes (29) geführt ist.

**22.** Anpassungsdichtelement (1) nach einem der Ansprüche 1 bis 4 oder 13 bis 21, **dadurch gekennzeichnet,** daß der Verschluß als umgreifende, über die ganze Länge sich erstreckende Manschette ausgebildet ist, wobei die wulstförmigen Verschlußelemente entlang der Manschette angeordnet sind.

# FIG1

FIG 2

FIG 3

FIG 4

FIG 5

FIG 6

FIG 7

FIG 8

FIG 9

## FIG 10

## FIG 11

## FIG 12

# EUROPÄISCHER
# RECHERCHENBERICHT

Nummer der Anmeldung

## EP 90 12 2758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | FR-A-2 623 666  (W. ROSE) <br> * Seite 7, Zeile 28 - Seite 9, Zeile 4 * * Seite 11, Zeilen 28 - 33; Figuren 1-4, 11 * <br> — — — | 1,5,6,2 | H 02 G 9/06 <br> H 02 G 15/013 <br> F 16 L 25/00 |
| A | NL-A-8 203 888  (H.V.R. NOORDELOOS) <br> * Seite 2, Zeile 22 - Seite 3, Zeile 4; Figuren 1, 2 * <br> — — — | 1-3 | |
| A | GB-A-9 690 78  (BICC) <br> * Ansprüche 1, 2; Figuren 1-3 * <br> — — — | 1-3 | |
| A,D | US-A-4 694 118  (G.P. SCHMIDT) <br> * Spalte 7, Zeilen 37 - 68; Figuren 5, 7, 9 * <br> — — — | 1-3 | |
| A | FR-A-1 334 993  (PAGEAUD) <br> * Zusammenfassung; Figuren 1-5 * <br> — — — | 1,2,4 | |
| A | US-A-4 538 021   (A.H. WILLIAMSON, JR.) <br> * Figuren 7-9 * <br> — — — | 1,9,12 | |
| A | DE-C-3 804 497  (STEWING) <br> * Figuren 2, 3 * <br> — — — — — | 1,5,6,8 | |

RECHERCHIERTE SACHGEBIETE (Int. Cl.5)

H 02 G <br> H 01 B <br> F 16 L

Der vorliegende Recherchenbericht wurde für alle Patentansprüche erstellt

| Recherchenort | Abschlußdatum der Recherche | Prüfer |
|---|---|---|
| Den Haag | 16 Mai 91 | LOMMEL A. |